# EUROPEAN PATENT SPECIFICATION

(11) **EP 2 565 960 B1**
(45) Date of publication and mention of the grant of the patent: **22.05.2019**
(21) Application number: 12150349.4
(22) Date of filing: 06.01.2012
(51) Int. Cl.: H01M 10/60

(54) **Battery pack**
Batteriepack
Bloc-batteries

(30) Priority: 01.09.2011 US 201161530144 P; 06.12.2011 US 201113312197
(43) Date of publication of application: 06.03.2013
(73) Proprietor: Samsung SDI Co., Ltd., Gyeonggi-do (KR); Robert Bosch GmbH, 70442 Stuttgart (DE)
(72) Inventor: YANG, Seung-Woo, Yongin-si (KR); CHA, In-Hwan, Yongin-si (KR)
(74) Representative: Gulde & Partner

(56) References cited:
- EP-A2- 1 548 858
- WO-A1-01/22522
- WO-A1-2007/007503
- WO-A1-2007/114615
- DE-A1-102009 053 506

## Description

The present invention relates to a battery pack, and more particularly, to a battery pack capable of improving lifespan of the battery pack.

### Description of the Related Art

Generally, a battery cell is used as an energy source for a mobile device, an electric car, a hybrid car, or the like and is used by variously changing a form of the battery cell according to a kind of external devices. Battery cells are disclosed in WO 2007/007503 A1, DE 10 2009 053 506 A1, WO 01/22522 A1, EP 1 548 858 A1 and WO 2007/114615 A1. WO 2007/007503 relates to a structure of a hybrid vehicle haying an internal combustion engine and a motor as its motive power source, and more particularly, to a structure of a hybrid vehicle including a battery pack of a side-flow type wherein cooling air flows in the horizontal direction

When an electric car, a hybrid car, or the like, consuming a large amount of power need long-time driving, high-power driving, a large-capacity battery module is configured by electrically connecting a plurality of battery cells so as to increase output and capacity. The battery module may increase output voltage or output current according to the number of batter cells embedded therein. Further, a battery pack may be configured by electrically connecting the plurality of battery modules to each other.

However, the high-output, large-capacity battery pack may generate a large amount of heat during a charging and discharging process. Therefore, the battery pack may easily discharge heat generated from each battery cell. Further, a temperature difference between installation positions of each battery cell within the battery pack needs not to be large.

When the heat discharge from the battery pack is not performed as it is, the temperature deviation between each battery cell occurs, thereby degrading charging and discharging efficiency. Further, the temperature in the battery pack rises by heat generated from the battery cell and as a result, the performance of the battery pack is degraded. In the worse case, a risk of explosion is caused.

### SUMMARY OF THE INVENTION

An object of the present invention is to provide a battery pack capable of improving a temperature difference and a difference pressure between the battery cells by bypassing a predetermined flux of a cooling medium to a side of an inlet side of a battery pack.

According to the present invention, a battery pack is provided, comprising a plurality of battery modules including at least a first unit of the battery modules and a second unit of the battery modules; a housing surrounding the plurality of battery modules, the housing

including an inlet and an outlet for a coolant medium such that a flow of the coolant medium can be realized between the inlet and the outlet in a flow direction, wherein the battery modules are arranged in the housing such that the first unit of the battery modules is positioned upstream and the second unit of the battery modules is positioned downstream in the flow direction; and one or more guide members between a battery module of the second unit and the interior surface of the housing.

The battery further comprises a first coolant flow pathway through the battery modules of the first unit and the second unit; a second coolant flow pathway along an exterior of the battery modules of the first unit; and a first converging coolant flow pathway connected with the first coolant flow pathway, the connection of the first coolant flow pathway with the first converging coolant flow pathway being disposed downstream of the first unit of battery modules in the first coolant flow pathway, the first converging coolant flow pathway is connected with the second coolant flow pathway and is arranged in such a manner that at least a part of the coolant flow flowing through the second coolant flow pathway is conducted to the first coolant flow pathway.

In a preferred embodiment, the inlet includes a main inlet connected to the first coolant flow pathway and a by-pass inlet connected to the second coolant flow pathway.

According to the invention, a unit of the battery modules comprises at least two battery modules, and the battery modules each include a plurality of battery cells that are tacked and spaced apart in a direction perpendicular to the flow direction, and end plates that are disposed at opposite ends of the battery cells in the direction perpendicular to the flow direction.

In that case, the second coolant flow pathway may be located between the end plates of the battery modules of the first unit and an interior surface of the housing, wherein the plurality of battery modules are spaced apart from each other in the flow direction.

The first converging coolant flow pathway includes one or more guide members between a battery module of the second unit that is in the flow direction closest to the first unit of the battery modules and the interior surface of the housing to guide the first converging coolant flow pathway to join the second coolant flow pathway with the first coolant flow pathway.

The battery modules of the first and second units are spaced apart from each other in the flow direction by a first predetermined distance, the first unit of battery modules is spaced apart from the second unit of battery modules in the flow direction by a second predetermined distance, and the second predetermined distance is greater than the first predetermined distance.

In a further embodiment, the plurality of battery modules further includes a third unit of battery modules positioned downstream of the second unit, wherein the first coolant flow
pathway additionally passes through the battery modules of the third unit, and the second coolant flow pathway additionally extends between the end plates of the battery modules of the second unit and the interior surface of the housing, and a second converging coolant flow pathway is connected with the second coolant flow pathway and is arranged in such a
manner that at least a part of the coolant flow flowing through the second coolant flow pathway is conducted to the first coolant flow pathway between the third unit of battery modules and the second unit of battery modules.

That is, the battery modules of the units are spaced apart from each other in the flow direction by a third predetermined distance, and the units of battery modules are spaced apart from each other in the flow direction by a fourth predetermined distances, wherein the fourth distance is greater than the third predetermined distance.

In case of arrangement of a third unit, one or more sealing members may be provided between the battery modules of the first unit and between the battery modules of the second unit to seal the first coolant flow pathway from the second coolant flow pathway; and between the battery modules of the third unit to seal the first coolant flow pathway from an exterior of the battery modules of the third unit.

Preferably, at least one of the converging coolant flow pathways includes a step part between the adjacent units of battery modules, such that a distance between the end plates of the battery modules of the unit positioned downstream of the respective converging coolant flow pathway and the interior surface of the housing is less than a distance between end plates of the battery modules of the unit positioned upstream of the respective converging coolant flow pathway and the interior surface of the housing.

In that case, the step part guides the respective converging coolant flow pathway to join the second coolant flow pathway with the first coolant flow pathway.

That is, at least one of the converging coolant flow pathways further includes one or more guide members between a battery module of a unit positioned downstream of the first unit and the interior surface of the housing to guide the respective converging coolant flow pathway to join the second coolant flow pathway with the first coolant flow pathway.

The first converging coolant flow pathways may further include one or more first guide members that partially restrict the second coolant flow pathway between the end plates of a battery modules of the second unit and the interior surface of the housing to guide the first converging coolant flow pathway to join the second coolant flow pathway with the first coolant flow pathway, and/ or one or more second guide members between battery modules of the third unit positioned upstream in the direction of the first unit and the interior surface of the housing to guide the second converging coolant flow pathway to join the second coolant flow pathway with the first coolant flow pathway.

According to the invention there is provided a battery pack including a plurality of battery units disposed at a predetermined intervals so that sides of battery cells face each other ;and a housing surrounding the battery units, wherein an inlet is provided in the housing, the inlet includes a main inlet supplying the cooling medium to the central portion of the battery units and a bypass inlet supplying the cooling medium to both ends of at least one battery unit.

A guide member is disposed between both ends of one battery unit comprising at least one battery module and an inner surface of the housing so that the cooling medium supplied to the bypass inlet passes along both ends of a predetermined number of battery modules and then, is introduced into the central portion of another battery module.

The guide member may be formed so as to close between both ends of the battery unit and the housing.

A step part may be formed in the housing so that the cooling medium supplied to the bypass inlet passes along both ends of the predetermined number of battery modules and then, is introduced into the central portion of another battery module.

The step part may be formed so that a width of the housing is gradually narrow along an introducing direction of the cooling medium. The step part is formed so as to close the space between both ends of a battery unit and the housing or partially close the space between both ends of the battery unit and the housing.

A sealing member may be formed at both ends of the remaining battery units at which the guide member or the step part is not formed so that the cooling medium supplied to the main inlet is not discharged to both ends of the battery module.

The sealing member may be made of sponge, rubber, or the like.

An interval between the battery modules at which the guide member or the step art are formed may be wider than an interval between the battery modules at which the sealing member is formed.

The interval between the battery modules at which the guide member or the step part may be formed may be15 mm to 25 mm and the interval between the battery modules at which the sealing member is formed may be 5 mm to 10 mm.

As set forth above, the exemplary embodiments of the present invention can improve the lifespan of the fan and the battery pack by reducing the operation of the fan due to the improvement in the temperature difference and the pressure difference of the battery cells even in case of a small flux of a cooling medium.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view showing a battery pack according to a first exemplary embodiment of the present invention.
FIG. 2 is an exploded perspective view showing the battery pack according to the first exemplary embodiment of the present invention.
FIG. 3 is a diagram showing a flow of a cooling medium of the battery pack according to the first exemplary embodiment of the present invention.
FIG. 4 is a diagram showing an interval between battery modules in the battery pack according to the first exemplary embodiment of the present invention.
FIG. 5 is a front view of the battery pack according to the first exemplary embodiment of the present invention.
FIG. 6 is a diagram showing a battery pack according to a second exemplary embodiment of the present invention.
FIG. 7 is a diagram showing a battery pack according to a third exemplary embodiment of the present invention.

### DETAILED DESCRIPTION OF THE INVENTION

In the following detailed description, only certain exemplary embodiments of the present invention have been shown and described, simply by way of illustration. However, the described embodiments may be modified in various different ways, all without departing from the spirit or scope of the present invention.

In describing the embodiment, well-known functions or constructions will not be described in detail since they may unnecessarily obscure the understanding of the present invention. In addition, it will be appreciated that like reference numerals refer to like elements throughout even though they are shown in different figures. Besides, in the figures, the thickness and sizes of each layer may be exaggerated for convenience of description and clarity and may be different from the actual thickness and size.

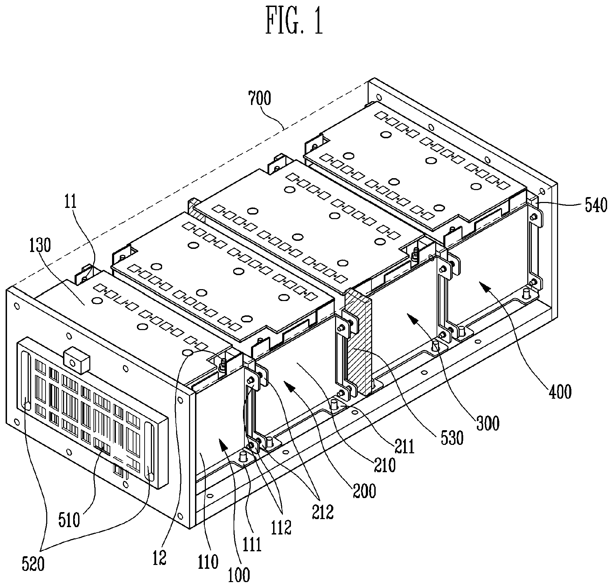

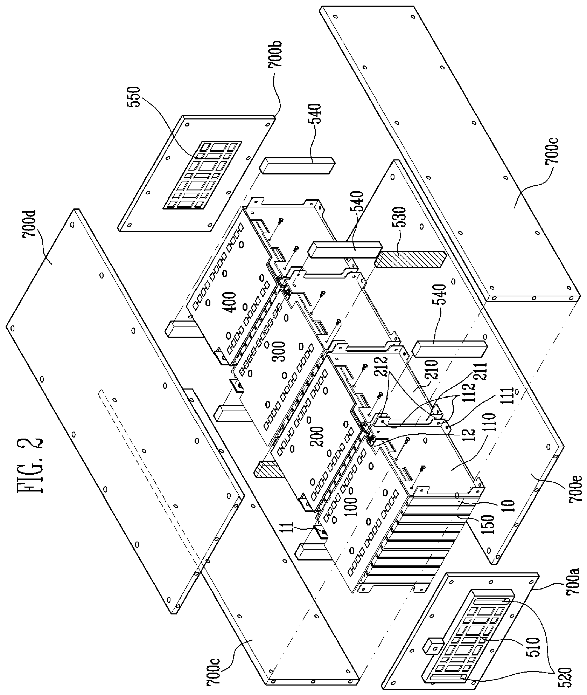

FIG. 1 is a perspective view showing a battery pack according to a first exemplary embodiment of the present invention and FIG. 2 is an exploded perspective view showing the battery pack according to the first exemplary embodiment of the present invention.

Referring to FIGS. 1 and 2, the battery pack according to the first exemplary embodiment of the present invention includes battery modules 100, 200, 300, and 400 and a housing 700 surrounding the battery modules. Further, the inside of the housing 700 is provided with a guide member 530 and a sealing member 540.

The first battery module 100 includes a plurality of battery cells 10 aligned in a direction perpendicular to a general flow direction, end plates 110 disposed at both ends of the plurality of battery cells 10, and a top cover 130 disposed on a top portion thereof. The first battery module 100 configured as described above and the second battery module 200 adjacent thereto are disposed in the housing 700 at a predetermined interval so that the sides of their battery cells 10 face each other.

The first battery module 100 and the second battery module 200 provide the first unit of the battery modules.

The third and fourth battery modules 300 and 400 adjacent to the second battery module 200 are disposed in the housing 700 so that the sides of their battery cells 10 face each other.

The third and fourth battery modules 300 and 400 provide the second unit of the battery modules.

In the housing 700 accommodating the plurality of battery modules 100, 200, 300, and 400, a main inlet 510 and a bypass inlet 520 are disposed on a surface 700a corresponding to one side of the first battery module 100. Further, in the housing 700, a surface 700b opposite to the main inlet and the bypass inlet, that is, a surface 700b corresponding to the other side of the fourth battery module 400 is provided with an outlet 550. In this configuration, the main inlet 510 may supply a cooling medium in a first coolant flow pathway (P1) to central portions of the plurality of battery modules 100, 200, 300, and 400. Further, the bypass inlet 520 may supply the cooling medium a second coolant flow pathway (P2) to both ends of the first and second battery modules 100 and 200 and the central portions of the third and fourth battery modules 300 and 400.

The cooling medium supplied to the main inlet 510 passes through the central portions of the plurality of battery modules 100, 200, 300, and 400 and reduces the temperature of the first and second battery modules 100 and 200 disposed near the main inlet 510. However, the cooling medium passing through the third and fourth battery modules 300 and 400 that are disposed far away from the main inlet 510 is passed also through the first and second battery modules 100 and 200: Thus, the temperature of the cooling medium is increased in advance, therefore it is difficult to lower the temperature of the third and fourth battery modules 300 and 400 by that flux of cooling medium

Hence, in order to compensate the temperature deviation between the first and second battery modules 100 and 200 and the third and fourth battery modules 300 and 400, in conventional battery packs the flux of the cooling medium is increased to the third and fourth battery modules 300 and 400 by operating the fan.

However, since the operation of the fan may degrade the lifespan of the fan and the battery pack, the exemplary embodiment of the present invention forms the bypass inlet 520 and a guide member 530 so as to prevent the degradation in the lifespan. By the guide members 530, a first converging coolant flow pathway (P3a) is realized joining the second coolant flow pathway (P2) and the first coolant flow pathway (P1).

In more detail, the guide member 530 capable of controlling the flow of the cooling medium introduced into the bypass inlet 520 may be disposed within the housing 700. Meanwhile, the guide member 530 may pass the cooling medium supplied to the bypass inlet 520 along both ends of the first and second battery modules 100 and 200 and then, introduce the cooling medium into the central portions of the third and fourth battery modules 300 and 400.

To this end, the guide member 530 may be disposed between both ends of the third battery module 300 and the inner surface of the housing 700. To this end, the guide member 530 may be disposed so as to close the space between both ends of the third battery module 300 and an inner surface of the housing 700.

Therefore, the cooling medium supplied to the bypass inlet 520 does not pass through the central portions of the first battery module 100 and the second battery module 200 but passes along both ends of the first battery module 100 and the second battery module 200. The guide member 530 closes the space between the third battery module 300 and the inner surface of the housing 700 and thus, the flow of the cooling medium is changed to the central side of the third battery module 300. Thereby, the cooling medium having a low temperature is supplied to the central portions of the third battery module 300 and the fourth battery module 400, thereby reducing the temperature of the third battery module 300 and the fourth battery module 400.

In this case, the cooling medium supplied to the main inlet 510 and the cooling medium supplied to the bypass inlet 520 are not mixed while the cooling medium passes through the first battery module 100 and the second battery module 200.

To this end, a sealing member 540 may be disposed at both ends between the first battery module 100 and the second battery module 200. The sealing member 540 may be made of sponge, rubber, or the like. As a result, the cooling medium supplied to the main inlet 510 and passing through the central portions of the first battery module 100 and the second battery module 200 and the cooling medium supplied to the bypass inlet 520 and passing along both ends of the first battery module 100 and the second battery module 200 may be moved to a separated space.

In addition, after the cooling medium supplied to the bypass inlet 520 moves to the central side of the third battery module 300, the cooling medium needs not to be discharged to both ends of the third battery module 300 and the fourth battery module 400. To this end, the sealing member 540 may be disposed at both ends between the third battery module 300 and the fourth battery module 400 and between both ends of the fourth battery module 400 and the side 700b of the housing 700 in which the outlet 550 is disposed.

Therefore, the temperature deviation between the first battery module 100 and the second battery module 200 disposed near the main inlet 510 and the bypass inlet 520 and the third battery module 300 and the fourth battery module 400 that are disposed far away from the main inlet 510 and the bypass inlet 520 may be reduced.

Hereinafter, the first battery module 100 as the battery module will be briefly described as an example of any one of the battery modules of the present invention.

The first battery module 100 is formed by aligning a plurality of battery cells 10 in one direction. The battery cell 10 may be manufactured by receiving the electrode assembly and the electrolyte in the case and then, sealing the case with the cap plate. The anode terminal 11 and the cathode terminal 12 and a vent disposed between the terminals 11 and 12 may be disposed on the cap plate. Further, the electrode assembly may be configured to have an anode plate and a cathode plate and a separator interposed between these plates. In this configuration, the anode plate is connected to the anode terminal 11 and the cathode plate is connected to the cathode terminal 12, thereby transferring energy generated by the electrochemical reaction of the electrode assembly and the electrolyte to the outside. In addition, the vent serves to a passage that discharges air generated from the inside of the battery cell 10 to the outside.

The battery cells 10 are aligned so that the wide surfaces thereof face each other. Further, the anode terminal 11 and the cathode terminal 12 of the two adjacent battery cells 10 may be electrically connected to each other via a bus bar. The bus bar is provided with a hole through which the anode terminal 11 and the cathode terminal 12 may penetrate and the bus bar connecting the terminals 11 and 12 penetrating through the holes may be fixed by a member such as a nut, or the like.

Further, both ends of the plurality of battery cells 10 are provided with a pair of end plates 110, the top portions thereof are provided with a top plate, and the bottom portions thereof are provided with a bottom plate. Further, the top portion of the top late may be further provided with the top cover 130.

The pair of end plates 110 is each disposed so as to contact the battery cell 10 at the outermost portion, thereby pressing/ and or holding the plurality of battery cells 10 into the inner side. In this case, the plurality of battery cells 10 supported by the pair of end plates 110, the top plate, and the bottom plate may be connected in series so that the anode terminal 11 and the cathode terminal 12 are alternately aligned with each other.

Each battery module 100, 200, 300, and 400 configured as described above is received in the housing 700 and is connected to each of the adjacent battery modules 100, 200, 300, and 400 by a fastening member.

Side portions of each end plate 110 and 210 disposed at both ends of the first battery module 100 and the second battery module 200 are vertically curved and the portions thereof are each provided with side fastening parts 112 and 212. The side fastening part 112 of the first battery module 100 is fastened with the side fastening part 212 of the second battery module 200 by the fastening member. In this case, each side fastening portion 112 and 212 is disposed on the top portion and the bottom portion of the end plates 110 and 210 and a gap therebetween may be a passage through which the cooling medium supplied to the bypass inlet 520 moves to both ends of the first battery module 100 and the second battery module 200.

Further, the mutually fastened battery modules 100, 200, 300, and 400 as described above are inserted into the housing 700. In this case, each battery module 100, 200, 300, and 400 is fastened to a bottom surface 700e of the housing 700 by the fastening member. Describing the first battery module 100 and the second battery module 200 as an example, the bottom portions of each end plate 110 and 210 are vertically curved and include bottom fastening parts 111 and 211 that are disposed so as to be horizontally disposed to the bottom surface 700e of the housing 700. Therefore, the bottom fastening parts 111 and 211 of each battery module 100, 200, 300, and 400 may be fastened to the housing 700 by the fastening member. In this case, the fastening member may include a bolt or a stud.

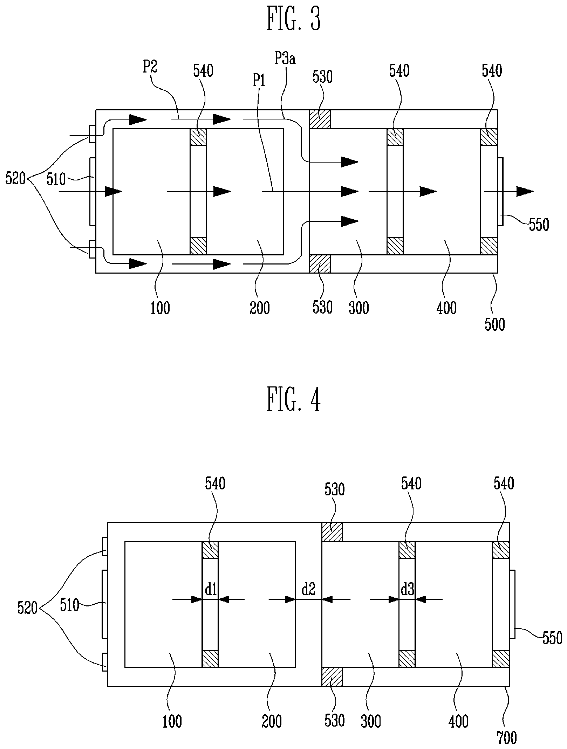

FIG. 3 is a diagram showing a flow of cooling medium of the battery pack according to the first exemplary embodiment of the present invention.

Referring to FIG. 3, one surface of the housing 700 is provided with the main inlet 510 supplying the cooling medium to the central portion of the first battery module 100 and the bypass inlet 520 supplying the cooling medium to both ends of the first battery module 100. When the cooling medium is supplied to the main inlet 510 and the bypass inlet 520, each cooling medium passes through the central portion and along both ends of the first battery module 100.

First, describing the flow of the cooling medium passing through the main inlet 510, the cooling medium is discharged to the outlet 550 by passing through the second, third, and fourth battery modules 200, 300, and 400 via the central portion of the first battery module 100.

Further, describing the flow of the cooling medium passing through the bypass inlet 520, the cooling medium passes along both ends of the second battery module 200 via both ends of the first battery module 100. Thereafter, the cooling medium passing through the bypass inlet 520 does not pass along both ends of the third battery module 300 any more because by the guide member 530 disposed between the third battery module 300 and the inner surface of the housing 700 prevents further flowing along both ends of the third and fourth battery modules 300 and 400. That is, the cooling medium is introduced into the central portion of the third battery module 300 by the guide member 530. Then, the cooling medium is discharged to the outlet 550 through the central portion of the fourth battery module 400 via the central portion of the third battery module 300.

The flow of the cooling medium may significantly improve the temperature difference and the difference pressure between each battery module 100, 200, 300, and 400.

That is, since the bypass inlet 520 is not formed in the related art, the cooling medium supplied to the main inlet 510 totally and sequentially passes through the first, second, third, and fourth battery modules 100, 200, 300, and 400. In this case, the temperature of the cooling medium passing through the third battery module 300 and the fourth battery module 400 that are disposed far away from the main inlet 510 is very high and as a result, the cooling efficiency is degraded and the temperature deviation between the battery cells 10 may be large.

However, since a battery pack 600 according to the present invention is provided with the bypass inlet 520, the cooling medium supplied to the bypass inlet 520 separately from the cooling medium supplied to the main inlet 510 does not pass through the central portion of the first and second battery modules 100 and 200 having the high temperature. Thereby, the temperature deviation between each battery module 100, 200, 300, and 400 may be remarkably reduced by introducing the cooling medium having the low temperature into the third and fourth battery modules 300 and 400.

FIG. 4 is a diagram showing an interval between battery modules in the battery pack according to the first exemplary embodiment of the present invention.

Referring to FIG. 4, an interval d2 between the second battery module 200 and the third battery module 300 in which the guide member 530 is disposed may be formed to be wider than an interval d1 between the first battery module 100 and the second battery module 200 in which the sealing member 540 is formed. In addition, the interval d2 between the second battery module 200 and the third battery module 300 may be formed to be wider than an interval d3 between the third battery module 300 and the fourth battery module 400.

In this configuration, the interval between the second battery module 200 and the third battery module 300 in which the guide member 530 is formed may be 15 mm to 25 mm and the interval between the first battery module 100 and the second battery module 200 in which the sealing member 540 is formed and between the third battery module 300 and the fourth battery module 400 is formed may be 5 mm to 10 mm.

Thereby, the cooling medium supplied to the bypass inlet 520 passes along both ends of the first and second battery modules 100 and 200, such that the cooling medium may be smoothly introduced between the second module 200 and the third battery module 300. Thereafter, the cooling medium supplied from the bypass inlet 520 is supplied from the main inlet 510 so as to be introduced into the central portion of the third battery module 300 together with the cooling medium passing through the central portion of the first battery module 100 and the second battery module 200.

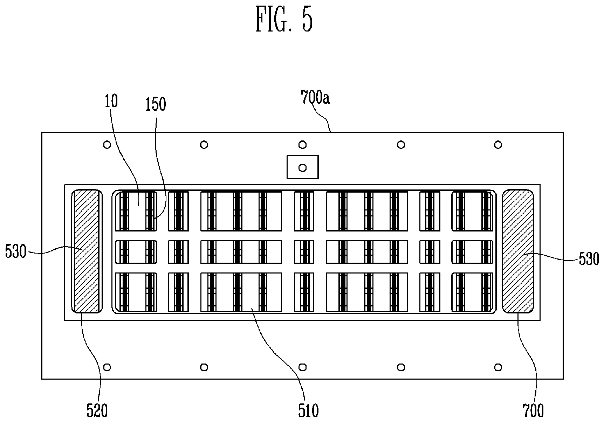

FIG. 5 is a front view of the battery pack according to the first exemplary embodiment of the present invention.

Referring to FIG. 5, the front surface of the battery pack is provided with the main inlet 510 and the bypass inlet 520. The cooling medium supplied to the main inlet 510 is supplied toward the central portion of the first battery module 100. In this case, a barrier 150 is disposed between each battery cell 10. The barrier 150 forms a predetermined space between the battery cells 10 to provide a passage through which the cooling medium may pass.

Further, the cooling medium supplied from the bypass inlet 520 is supplied toward both ends of the first battery module 100. In this case, both ends of the first and second battery modules 100 and 200 are provided with a space between each side fastening parts 112 and 212 (see FIG. 2). Thereby, the cooling medium supplied to the bypass inlet 520 may smoothly pass along both ends of the first and second battery modules 100 and 200. [Table 1] shows the temperature difference between the battery cells for each flux of the cooling medium and the temperature deviation between the battery cell and the periphery thereof according to whether there is the bypass inlet 520 according to the exemplary embodiment of the present invention.

**[Table 1]**

| Division | Bypass Inlet(X) | | | Bypass Inlet(O) |
|---|---|---|---|---|
| Flux of Cooling Medium | 1.5A | 3A | 4A | 2A |
| Temperature Difference Between Battery Cells to Targeted Value ( ) | +3.2 | +1.3 | +0.4 | -0.6 |
| Temperature Difference between Battery Cell and Periphery Thereof With Respect To Targeted Value ( ) | +4.2 | -0.3 | -1.8 | -1.9 |

As can be appreciated from [Table 1], the temperature difference between the battery cells disposed in other battery modules needs to be controlled to a predetermined targeted value and the temperature between the battery cells and the periphery thereof also needs to be controlled to a predetermined targeted value or less. First, describing the case in which the bypass inlet is not formed, when the flux of the cooling medium is supplied at 1.5A, the temperature difference between the battery cells is 3.2 °C higher than the targeted value. Further, the temperature difference between the battery cells and the periphery thereof is 4.2°C higher than the targeted value, such that specifications required in the battery pack are not satisfied.

In addition, when the bypass inlet is not formed, the flux of the cooling medium is increased to 3A and 4A, respectively, the temperature difference between the battery cell and the periphery thereof is 0.3 °C or 1.8 °C lower than the targeted value, such that the specifications are satisfied. However, the temperature difference between the battery cells is 1.3 °C or 0.4 °C higher than the targeted value, such that the specifications are not satisfied.

Describing the case in which the bypass inlet according to the exemplary embodiment of the present invention is mounted, when the flux of the cooling medium is supplied at 2A, the temperature difference between the battery cells is 0.6 °C lower than the targeted value. Further, it can be appreciated that the temperature difference between the battery cells and the periphery thereof is 1.9°C lower than the targeted value, such that the specifications required in the battery pack are satisfied.

That is, it can be appreciated that even though the cooling medium is supplied at a lower flux in the case in which the bypass inlet is formed than in the case in which the bypass inlet is not formed, the results satisfying the specifications required in the battery pack are shown.

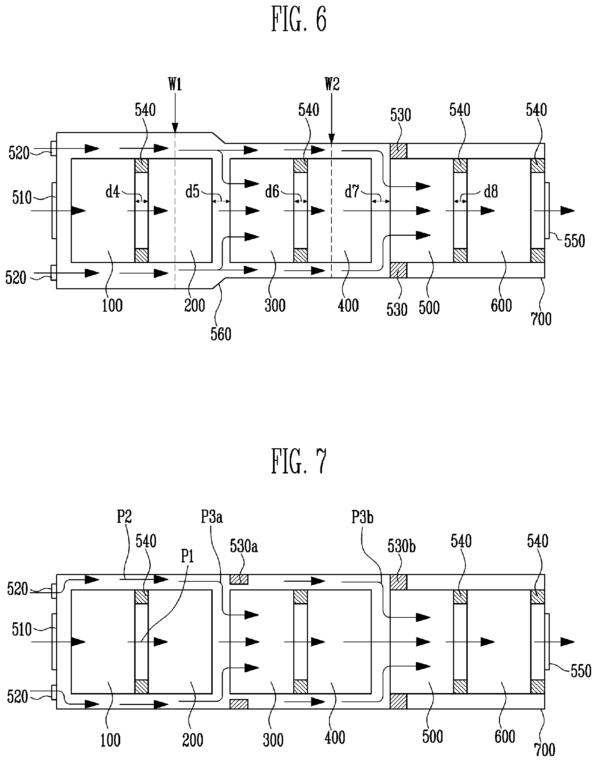

FIG. 6 is a diagram showing a battery pack according to a second exemplary embodiment of the present invention.

Referring to FIG. 6, six battery modules 100, 200, 300, 400, 500, and 600 are received in the housing 700. Here, the battery units 500 and 600 provide a third unit of battery modules. In this configuration, in order to compensate the temperature difference between each battery module 100, 200, 300, 400, 500, and 600, the housing 700 may be provided with a step part 560 and the guide member 530.

The step part 560 and the guide member 530 both serve to control the flow of the cooling medium supplied from the bypass inlet 520. In this case, the step part 560 is disposed between the second battery module 200 and the third battery module 300 and the guide member 530 is disposed between the fourth battery module 400 and the fifth battery module 500.

As the battery modules 100, 200, 300, 400, 500, and 600 approach the main inlet 510 or the bypass inlet 520, the cooling medium of which the temperature is gradually reduced is supplied.

Thereby, the step part 560 controlling the flow of the cooling medium having the low temperature supplied from the bypass inlet 520 is disposed between the battery modules 200 and 300, and the guide member 530 is disposed between the battery modules 400 and 500. In this case, the preferred temperature difference between each battery module 100, 200, 300, 400, 500, and 600 is about 4 °C to 5 °C. In this case, in order to maintain the temperature difference of about 4 °C to 5 °C between each battery module 100, 200, 300, 400, 500, and 600 without operating the fan, it is preferable to control the flow of the cooling medium between the battery modules 100, 200, 300, 400, 500, and 600 in two units.

That is, even in the case of low flux of cooling medium, in order to control the flow of the cooling medium so that the preferred temperature difference is shown between each battery module 100, 200, 300, 400, 500, and 600, it is preferable to form the step part 560 or the guide member 530 between the battery modules 100, 200, 300, 400, 500, and 600 in two units.

In the battery pack according to the second exemplary embodiment of the present invention, the step part 560 may be disposed in the housing 700 disposed between the second battery module 200 and the third battery module 300. Further, the guide member 530 may be disposed between both ends of the fifth battery module 500 and the inner surface of the housing 700.

Meanwhile, the step part 560 passes a portion of the cooling medium supplied to the bypass inlet 520 along both ends of the first and second battery modules 100 and 200 and then, introduces a portion of the cooling medium into the central portions of the third and fourth battery modules 300 and 400.

In this case, the step part 560 may be inclinedly formed so that the width of the housing 700 is gradually narrow. Thereby, a width W2 of the housing 700 after the step part 560 is formed is formed to be narrower than a width W1 of the housing before the step part 560 is formed in the housing 700. The step part 560 is formed so as to close between both ends of the third battery module 300 and the housing 700. Thereby, a portion of the cooling medium passing along both ends of the first and second battery modules 100 and 200 may be introduced to both ends of the third battery module 300 and the remaining cooling medium may be introduced into the central portion of the third battery module 300.

In this case, the cooling medium passing along both ends of the third battery module 300 passes also along both ends of the fourth battery module 400. Further, the cooling medium is introduced into the central portion of the fifth battery module 500 in a second converging coolant flow pathway (P3b) by the guide member 530 disposed between both ends of the fifth battery module 500 and the inner surface of the housing 700. In this case, the guide member 530 may be disposed so as to seal between both ends of the fifth battery module 500 and an inner surface of the housing 700.

Thereafter, the cooling medium introduced into the central portion of the fifth battery module 500 from both ends of the fourth battery module 400 and the cooling medium supplied from the main inlet 510 pass through the central portion of the sixth battery module 600 and then, are discharged to the outlet 550.

In addition, the cooling medium supplied from the main inlet 510 and the bypass inlet 520 needs not to be mixed. To this end, the sealing member 540 may be further disposed at both ends between the first battery module 100 and the second battery module 200, both ends between the third battery module 300 and the fourth battery module 400, both ends between the fifth battery module 500 and the sixth battery module 600, and between the sixth battery module 600 and the inner surface of the housing 700 in which the outlet 550 is disposed.

In this case, the interval between each battery module 100, 200, 300, 400, 500, and 600 may be formed to be different. This is to more smoothly move the cooling medium supplied from the bypass inlet 520 so as to be introduced into the central side of the third battery module 300 and the cooling medium passing through both ends of the fourth battery module 400 so as to be introduced into the central side of the fifth battery module 500.

That is, an interval d4 between the first battery module 100 and the second battery module 200, an interval d6 between the third battery module 300 and the fourth battery module 400, and an interval d8 between the fifth battery module 500 and the sixth battery module 600 are formed to be the same. However, the interval d5 between the second battery module 200 and the third battery module 300 and the interval d7 between the fourth battery module 400 and the fifth battery module 500 may be formed to be larger than d4, d6, and d8.

Although not shown in the exemplary embodiment of the present invention, the step part 560 is formed so as to close between both ends of the specific battery module and the inner surface of the housing 700, such that the step part 560 may perform the same role as the guide member 530.

FIG. 7 is a diagram showing a battery pack according to a third exemplary embodiment of the present invention.

Referring to FIG. 7, the six battery modules 100, 200, 300, 400, 500, and 600 are received in the housing 700. In this configuration, in order to compensate the temperature difference between each battery module 100, 200, 300, 400, 500, and 600, the housing 700 may be provided with a first guide member 530a and a second guide member 530b.

The first guide member 530a and the second guide member 530b both serve to control the flow of the cooling medium supplied from the bypass inlet 520. In this case, the first guide member 530a is disposed between the second battery module 200 and the third battery module 300 and the second guide member 530b is disposed between the fourth battery module 400 and the fifth battery module 500.

The first guide member 530a is disposed between both ends of the third battery module 300 and the inner surface of the housing 700. Thereby, a portion of the cooling medium after the cooling medium supplied to the bypass inlet 520 passes along both ends of the first and second battery modules 100 and 200 may be introduced into the central portion of the third battery module 300 and the remaining cooling medium may be introduced to both ends of the third battery module 300. That is, the guide member 530a may be formed so as to close a portion between both ends of the third battery module 300 and the housing 700.

Further, the cooling medium passing along both ends of the fourth battery module 400 is introduced into the central portion of the fifth battery module 500 by the second guide member 530b formed so as to close between both ends of the fifth battery module 500 and the inner surface of the housing 700. Then, the cooling medium passes through the central portion of the sixth battery module 600 and then, is discharged to the outlet 550.

In this case, the cooling medium supplied from the main inlet 510 passes through the central portions of the first, second, third, fourth, fifth, and sixth battery modules 100, 200, 300, 400, 500, and 600 and then, is discharged to the outlet 550.

In this case, the cooling medium supplied from the main inlet 510 and the bypass inlet 520 needs not to be mixed. To this end, the sealing member 540 may be further disposed at both ends between the first battery module 100 and the second battery module 200, both ends between the third battery module 300 and the fourth battery module 400, both ends between the fifth battery module 500 and the sixth battery module 600, and between the sixth battery module 600 and the inner surface of the housing 700 in which the outlet 550 is disposed.

As described above, the cooling medium supplied from the main inlet 510 may cool the first battery module 100 and the second battery module 200. Further, the cooling medium supplied from the bypass inlet 520 is sequentially and partially introduced into the central portions of the third, fourth, fifth, and sixth battery modules 300, 400, 500, and 600 without passing through the central portions of the first battery module 100 and the second battery module 200. Thereby, the cooling medium supplied from the bypass inlet 520 may cool the third, fourth, fifth, and sixth battery modules 300, 400, 500, and 600. In this case, the interval between each battery module 100, 200, 300, 400, 500, and 600 may be formed to be different.
While the present invention has been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A battery pack, comprising:
a plurality of battery modules (100, 200, 300, 400) including at least a first unit of the two battery modules (100, 200) and a second unit of the two battery modules (300, 400);
a housing (700) surrounding the plurality of battery modules (100, 200, 300, 400), the housing (700) including an inlet (510, 520) and an outlet (550) for a coolant medium such that a flow of the coolant medium can be realized between the inlet and the outlet in a flow direction, wherein the battery modules (100, 200, 300, 400) are arranged in the housing such that the first unit of the battery modules (100, 200) is positioned upstream and the second unit of the battery modules (300, 400) is positioned downstream in the flow direction;
one or more guide members (530) between a battery module (300, 400) of the second unit and the interior surface of the housing (700),
**characterized in that**
the guide member (530) realizing a first converging coolant flow pathway (P3a), joining a first coolant flow pathway (P1) through the battery modules of the first unit (100, 200) and the second unit (300, 400) and a second coolant flow pathway (P2) along an exterior of the battery modules (100, 200) of the first unit,
wherein the battery modules (100, 200 and 300, 400, respectively) of the first unit (100, 200) and second unit (300, 400) are spaced apart from each other in the flow direction by a first predetermined distance (d1, d3),
the first unit of battery modules (100, 200) is spaced apart from the second unit of battery modules (300, 400) in the flow direction by a second predetermined distance (d2),
and wherein the second predetermined distance (d2) is greater than the first predetermined distance (d1, d3).

2. The battery pack as claimed in claim 1, wherein
the first converging coolant flow pathway (P3a) is connected with the first coolant flow pathway (P1), the connection of the first coolant flow pathway (P1) with the first converging coolant flow pathway (P3a) being disposed downstream of the first unit (100, 200) of battery modules in the first coolant flow pathway (P1), the first converging coolant flow pathway (P3a) is connected with the second coolant flow pathway (P2) and is arranged in such a manner that at least a part of the coolant flow flowing through the second coolant flow pathway (P2) is conducted to the first coolant flow pathway (P1).

3. The battery pack as claimed in one of the preceding claims, wherein the inlet (510, 520) includes a main inlet (510) connected to the first coolant flow pathway (P1) and a by-pass inlet (520) connected to the second coolant flow pathway (P2).

4. The battery pack as claimed in one of the preceding claims, wherein:
a unit of the battery modules comprises at least two battery modules (100, 200, 300, 400), and
the battery modules (100, 200, 300, 400) each include a plurality of battery cells (10) that are stacked and spaced apart in a direction perpendicular to the flow direction, and end plates (110) that are disposed at opposite ends of the battery cells (10) in the direction perpendicular to the flow direction.

5. The battery pack as claimed in claim 4, wherein the second coolant flow pathway (P2) is located between the end plates (110) of the battery modules (100, 200) of the first unit and an interior surface of the housing (700).

6. The battery pack as claimed in claim 5, wherein the plurality of battery modules (100, 200, 300, 400) are spaced apart from each other in the flow direction.

7. The battery pack as claimed in one of the preceding claims, wherein:
the plurality of battery modules further includes a third unit of battery modules (500, 600) positioned downstream of the second unit, wherein
the first coolant flow pathway (P1) additionally passes through the battery modules of the third unit (500, 600), and
the second coolant flow pathway (P2) additionally extends between the end plates (100) of the battery modules of the second unit (300, 400) and the interior surface of the housing (700), and
a second converging coolant flow pathway (P3b) is connected with the second coolant flow pathway (P2) and is arranged in such a manner that at least a part of the coolant flow flowing through the second coolant flow pathway (P2) is conducted to the first coolant flow pathway (P1) between the third unit (500, 600) of battery modules and the second unit (300, 400) of battery modules.

8. The battery pack as claimed in one of the preceding claims, wherein:
the battery modules (100 - 600) of the units are spaced apart from each other in the flow direction by a third predetermined distance (d4, d6, d8),
and the units (100-200, 300-400, 500-600) of battery modules are spaced apart from each other in the flow direction by a fourth predetermined distances (d5, d7),
wherein the fourth distance (d5, d7) is greater than the third predetermined distance (d4, d6 d8).

9. The battery module as claimed in one of the claims 7 and 8, wherein one or more sealing members (540) are provided between the battery modules (100, 200) of the first unit and between the battery modules (300, 400) of the second unit to seal the first coolant flow pathway (P1) from the second coolant flow pathway (P2); and between the battery modules (500, 600) of the third unit to seal the first coolant flow pathway from an exterior of the battery modules (500, 600) of the third unit.

10. The battery module as claimed in one of the claims 7 to 9, wherein at least one of the converging coolant flow pathways (P3) includes a step part (560) between the adjacent units of battery modules, such that a distance between the end plates (100) of the battery modules of the unit positioned downstream of the respective converging coolant flow pathway (P3) and the interior surface of the housing (700) is less than a distance between end plates (100) of the battery modules of the unit positioned upstream of the respective converging coolant flow pathway (P3) and the interior surface of the housing (700).

11. The battery module as claimed in claim 10, wherein the step part (560) guides the respective converging coolant flow pathway (P3) to join the second coolant flow pathway (P2) with the first coolant flow pathway (P1).

12. The battery module as claimed in one of the claims 7 to 11, wherein at least one of the converging coolant flow pathways (P3) further includes one or more guide members (530b) between a battery module (500, 600) of a unit positioned downstream of the first unit and the interior surface of the housing (700) to guide the respective converging coolant flow pathway (P3b) to join the second coolant flow pathway (P2) with the first coolant flow pathway (P1).

13. The battery module as claimed in one of the claims 9 to 12, wherein the first converging coolant flow pathways (P3a) further includes:
one or more first guide members (530a) that partially restrict the second coolant flow pathway between the end plates (100) of a battery modules of the second unit (300), (400) and the interior surface of the housing (700) to guide the first converging coolant flow pathway (P3a) to join the second coolant flow pathway (P2) with the first coolant flow pathway (P1), and/ or
one or more second guide members (530b) between battery modules (500, 600) of the third unit positioned upstream in the direction of the first unit and the interior surface of the housing (700) to guide the second converging coolant flow pathway (P3b) to join the second coolant flow pathway (P2) with the first coolant flow pathway (P1).

## Patentansprüche

1. Ein Batteriepack, aufweisend:
eine Vielzahl von Batteriemodulen (100, 200, 300, 400), die zumindest eine erste Einheit der zwei Batteriemodule (100, 200) und eine zweite Einheit der zwei Batteriemodule (300, 400) aufweist;
ein Gehäuse (700), das die Vielzahl der Batteriemodule (100, 200, 300, 400) umgibt, wobei das Gehäuse (700) einen Einlass (510, 520) und einen Auslass (550) für ein Kühlmedium derart aufweist, dass ein Fluss des Kühlmediums in einer Strömungsrichtung zwischen dem Einlass und dem Auslass realisiert werden kann, wobei die Batteriemodule (100, 200, 300, 400) im Gehäuse derart angeordnet sind, dass in Strömungsrichtung die erste Einheit der Batteriemodule (100, 200) stromaufwärts positioniert ist und die zweite Einheit der Batteriemodule (300, 400) stromabwärts positioniert ist;
ein oder mehrere Führungselemente (530) zwischen einem Batteriemodul (300, 400) der zweiten Einheit und der Innenfläche des Gehäuses (700),
**dadurch gekennzeichnet, dass**
das Führungselement (530) einen ersten zusammenlaufenden Kühlmittelströmungspfad (P3a), der einen ersten Kühlmittelströmungspfad (P1) durch die Batteriemodule der ersten Einheit (100, 200) und der zweiten Einheit (300, 400) und einen zweiten Kühlmittelströmungspfad (P2) entlang einer Außenseite der Batteriemodule (100, 200) der ersten Einheit verbindet, realisiert,
wobei die Batteriemodule (jeweils 100, 200 und 300, 400) der ersten Einheit (100, 200) und zweiten Einheit (300, 400) in der Strömungsrichtung in einem ersten vorbestimmten Abstand (d1, d3) voneinander beabstandet sind,
die erste Einheit der Batteriemodule (100, 200) in der Strömungsrichtung in einem zweiten vorbestimmten Abstand (d2) von der zweiten Einheit der Batteriemodule (300, 400) beabstandet ist,
und wobei der zweite vorbestimmte Abstand (d2) größer als der erste vorbestimmte Abstand (d1, d3) ist.

2. Der Batteriepack nach Anspruch 1, wobei
der erste zusammenlaufende Kühlmittelströmungspfad (P3a) mit dem ersten Kühlmittelströmungspfad (P1) verbunden ist, wobei die Verbindung des ersten Kühlmittelströmungspfads (P1) mit dem ersten zusammenlaufenden Kühlmittelströmungspfad (P3a) stromabwärts der ersten Einheit (100, 200) der Batteriemodule im ersten Kühlmittelströmungspfad (P1) angeordnet ist, wobei der erste zusammenlaufende Kühlmittelströmungspfad (P3a) mit dem zweiten Kühlmittelströmungspfad (P2) verbunden ist und derart angeordnet ist, dass zumindest ein Teil des Kühlmittelflusses, der durch den zweiten Kühlmittelströmungspfad (P2) strömt, zum ersten Kühlmittelströmungspfad (P1) geleitet wird.

3. Der Batteriepack nach einem der vorhergehenden Ansprüche, wobei der Einlass (510, 520) einen Haupteinlass (510), der mit dem ersten Kühlmittelströmungspfad (P1) verbunden ist, und einen Bypass-Einlass (520), der mit dem zweiten Kühlmittelströmungspfad (P2) verbunden ist, aufweist.

4. Der Batteriepack nach einem der vorhergehenden Ansprüche, wobei:
eine Einheit der Batteriemodule zumindest zwei Batteriemodule (100, 200, 300, 400) aufweist, und
die Batteriemodule (100, 200, 300, 400) jeweils eine Vielzahl von Batteriezellen (10), die in einer Richtung perpendikulär zur Strömungsrichtung gestapelt und voneinander beabstandet sind, und Endplatten (110), die an gegenüberliegenden Enden der Batteriezellen (10) in der Richtung perpendikulär zur Strömungsrichtung angeordnet sind, aufweisen.

5. Der Batteriepack nach Anspruch 4, wobei sich der zweite Kühlmittelströmungspfad (P2) zwischen den Endplatten (110) der Batteriemodule (100, 200) der ersten Einheit und einer Innenfläche des Gehäuses (700) befindet.

6. Der Batteriepack nach Anspruch 5, wobei die Vielzahl der Batteriemodule (100, 200, 300, 400) in der Strömungsrichtung voneinander beabstandet ist.

7. Der Batteriepack nach einem der vorhergehenden Ansprüche, wobei:
die Vielzahl der Batteriemodule ferner eine dritte Einheit von Batteriemodulen (500, 600), die stromabwärts der zweiten Einheit positioniert sind, aufweist, wobei
der erste Kühlmittelströmungspfad (P1) zusätzlich durch die Batteriemodule der dritten Einheit (500, 600) verläuft, und
sich der zweite Kühlmittelströmungspfad (P2) zusätzlich zwischen den Endplatten (100) der Batteriemodule der zweiten Einheit (300, 400) und der Innenfläche des Gehäuses (700) erstreckt, und
ein zweiter zusammenlaufender Kühlmittelströmungspfad (P3b) mit dem zweiten Kühlmittelströmungspfad (P2) verbunden ist und derart angeordnet ist, dass zumindest ein Teil des Kühlmittelflusses, der durch den zweiten Kühlmittelströmungspfad (P2) strömt, zum ersten Kühlmittelströmungspfad (P1) zwischen der dritten Einheit (500, 600) der Batteriemodule und der zweiten Einheit (300, 400) der Batteriemodule geleitet wird.

8. Der Batteriepack nach einem der vorhergehenden Ansprüche, wobei:
die Batteriemodule (100-600) in der Strömungsrichtung in einem dritten vorbestimmten Abstand (d4, d6, d8) voneinander beabstandet sind,
und die Einheiten (100-200, 300-400, 500-600) der Batteriemodule in der Strömungsrichtung in einem vierten vorbestimmten Abstand (d5, d7) voneinander beabstandet sind,
wobei der vierte Abstand (d5, d7) größer als der dritte vorbestimmte Abstand (d4, d6, d8) ist.

9. Das Batteriemodul nach einem der Ansprüche 7 und 8, wobei ein oder mehrere Dichtungselemente (540) zwischen den Batteriemodulen (100, 200) der ersten Einheit und zwischen den Batteriemodulen (300, 400) der zweiten Einheit bereitgestellt werden, um den ersten Kühlmittelströmungspfad (P1) vom zweiten Kühlmittelströmungspfad (P2) abzudichten, und zwischen den Batteriemodulen (500, 600) der dritten Einheit bereitgestellt werden, um den ersten Kühlmittelströmungspfad von einer Außenseite der Batteriemodule (500, 600) der dritten Einheit abzudichten.

10. Das Batteriemodul nach einem der Ansprüche 7 bis 9, wobei zumindest einer der zusammenlaufenden Kühlmittelströmungspfade (P3) einen Stufenteil (560) zwischen den benachbarten Einheiten der Batteriemodule aufweist, derart, dass ein Abstand zwischen den Endplatten (100) der Batteriemodule der Einheit, die stromabwärts des jeweiligen zusammenlaufenden Kühlmittelströmungspfads (P3) positioniert ist, und der Innenfläche des Gehäuses (700) kleiner ist als ein Abstand zwischen Endplatten (100) der Batteriemodule der Einheit, die stromaufwärts des jeweiligen zusammenlaufenden Kühlmittelströmungspfads (P3) positioniert ist, und der Innenfläche des Gehäuses (700).

11. Das Batteriemodul nach Anspruch 10, wobei der Stufenteil (560) den jeweiligen zusammenlaufenden Kühlmittelströmungspfad (P3) führt, so dass er den zweiten Kühlmittelströmungspfad (P2) mit dem ersten Kühlmittelströmungspfad (P1) verbindet.

12. Das Batteriemodul nach einem der Ansprüche 7 bis 11, wobei zumindest einer des zusammenlaufenden Kühlmittelströmungspfads (P3) ferner ein oder mehrere Führungselemente (530b) zwischen einem Batteriemodul (500, 600) einer Einheit, die stromabwärts der ersten Einheit positioniert ist, und der Innenfläche des Gehäuses (700) aufweist, um den jeweiligen zusammenlaufenden Kühlmittelströmungspfad (P3b) zu führen, so dass er den zweiten Kühlmittelströmungspfad (P2) mit dem ersten Kühlmittelströmungspfad (P1) verbindet.

13. Das Batteriemodul nach einem der Ansprüche 9 bis 12, wobei der erste zusammenlaufende Kühlmittelströmungspfad (P3a) ferner aufweist:
ein oder mehrere erste Führungselemente (530a), die den zweiten Kühlmittelströmungspfad zwischen den Endplatten (100) von Batteriemodulen der zweiten Einheit (300), (400) und der Innenfläche des Gehäuses (700) teilweise begrenzen, um den ersten zusammenlaufenden Kühlmittelströmungspfad (P3a) zu führen, so dass er den zweiten Kühlmittelströmungspfad (P2) mit dem ersten Kühlmittelströmungspfad (P1) verbindet, und/oder
ein oder mehrere zweite Führungselemente (530b) zwischen Batteriemodulen (500, 600) der dritten Einheit, die stromaufwärts in der Richtung der ersten Einheit positioniert ist, und der Innenfläche des Gehäuses (700), um den zweiten zusammenlaufenden Kühlmittelströmungspfad (P3b) zu führen, so dass er den zweiten Kühlmittelströmungspfad (P2) mit dem ersten Kühlmittelströmungspfad (P1) verbindet.

## Revendications

1. Bloc-batteries, comprenant :
une pluralité de modules de batterie (100, 200, 300, 400) comprenant au moins une première unité des deux modules de batterie (100, 200) et une deuxième unité des deux modules de batterie (300, 400) ;
un boîtier (700) enveloppant la pluralité de modules de batterie (100, 200, 300, 400), le boîtier (700) comprenant une entrée (510, 520) et une sortie (550) pour un fluide de refroidissement de telle sorte qu'un écoulement du fluide de refroidissement peut être réalisé entre l'entrée et la sortie dans une direction d'écoulement, où les modules de batterie (100, 200, 300, 400) sont agencés dans le boîtier de telle sorte que la première unité des modules de batterie (100, 200) est positionnée en amont et la deuxième unité des modules de batterie (300, 400) est positionnée en aval dans le sens de l'écoulement ;
un ou plusieurs organes de guidage (530) entre un module de batterie (300, 400) de la deuxième unité et la surface intérieure du boîtier (700),
**caractérisé en ce que**
l'organe de guidage (530) forme un premier passage convergent d'écoulement de fluide de refroidissement (P3a), reliant un premier passage d'écoulement de fluide de refroidissement (P1) traversant les modules de batterie de la première unité (100, 200) et de la deuxième unité (300, 400) et un second passage d'écoulement de fluide de refroidissement (P2) le long d'un extérieur des modules de batterie (100, 200) de la première unité,
dans lequel les modules de batterie (100, 200 et 300, 400, respectivement) de la première unité (100, 200) et de la deuxième unité (300, 400) sont espacés les uns des autres dans le sens de l'écoulement d'une première distance prédéterminée (d1, d3),
la première unité de modules de batterie (100, 200) est espacée de la deuxième unité de modules de batterie (300, 400) dans le sens de l'écoulement d'une deuxième distance prédéterminée (d2),
et dans lequel la deuxième distance prédéterminée (d2) est supérieure à la première distance prédéterminée (d1, d3) .

2. Bloc-batteries selon la revendication 1, dans lequel le premier passage convergent d'écoulement de fluide de refroidissement (P3a) est raccordé au premier passage d'écoulement de fluide de refroidissement (P1), le raccord du premier passage d'écoulement de fluide de refroidissement (P1) avec le premier passage convergent d'écoulement de fluide de refroidissement (P3a) étant disposé en aval de la première unité (100, 200) de modules de batterie dans le premier passage d'écoulement de fluide de refroidissement (P1), le premier passage convergent d'écoulement de fluide de refroidissement (P3a) est raccordé au second passage d'écoulement de fluide de refroidissement (P2) et est agencé d'une manière telle qu'au moins une partie du fluide de refroidissement s'écoulant à travers le second passage de fluide de refroidissement (P2) est dirigée vers le premier passage de fluide de refroidissement (P1).

3. Bloc-batteries selon l'une des revendications précédentes, dans lequel l'entrée (510, 520) comprend une entrée principale (510) raccordée au premier passage d'écoulement de fluide de refroidissement (P1) et une entrée de dérivation (520) raccordée au second passage d'écoulement de fluide de refroidissement (P2).

4. Bloc-batteries selon l'une des revendications précédentes, dans lequel :
une unité des modules de batterie comprend au moins deux modules de batterie (100, 200, 300, 400), et
les modules de batterie (100, 200, 300, 400) comprennent chacun une pluralité d'éléments de batterie (10) qui sont empilés et espacés dans une direction perpendiculaire à la direction de l'écoulement, et des plaques d'extrémité (110) qui sont disposées aux extrémités opposées des éléments de batterie (10) dans la direction perpendiculaire à la direction de l'écoulement.

5. Bloc-batteries selon la revendication 4, dans lequel le second passage d'écoulement de fluide de refroidissement (P2) est situé entre les plaques d'extrémité (110) des modules de batterie (100, 200) de la première unité et une surface intérieure du boîtier (700).

6. Bloc-batteries selon la revendication 5, dans lequel la pluralité de modules de batterie (100, 200, 300, 400) sont espacés les uns des autres dans la direction de l'écoulement.

7. Bloc-batteries selon l'une des revendications précédentes, dans lequel :
la pluralité de modules de batterie comprend en outre une troisième unité de modules de batterie (500, 600) positionnée en aval de la deuxième unité, où
le premier passage d'écoulement de fluide de refroidissement (P1) traverse également les modules de batterie de la troisième unité (500, 600), et
le second passage d'écoulement de fluide de refroidissement (P2) s'étend également entre les plaques d'extrémité (100) des modules de batterie de la deuxième unité (300, 400) et la surface intérieure du boîtier (700), et
un second passage convergent d'écoulement de fluide de refroidissement (P3b) est raccordé au second passage d'écoulement de fluide de refroidissement (P2) et est agencé d'une manière telle qu'au moins une partie du fluide de refroidissement s'écoulant à travers le second passage d'écoulement de fluide de refroidissement (P2) est acheminée vers le premier passage d'écoulement de fluide de refroidissement (P1) entre la troisième unité (500, 600) de modules de batterie et la deuxième unité (300, 400) de modules de batterie.

8. Bloc-batteries selon l'une des revendications précédentes, dans lequel :
les modules de batterie (100 - 600) des unités sont espacés les uns des autres dans le sens de l'écoulement d'une troisième distance prédéterminée (d4, d6, d8),
et les unités (100-200, 300-400, 500-600) de modules de batterie sont espacées les unes des autres dans le sens de l'écoulement d'une quatrième distance prédéterminée (d5, d7),
dans lequel la quatrième distance prédéterminée (d5, d7) est supérieure à la troisième distance prédéterminée (d4, d6, d8).

9. Module de batterie selon l'une des revendications 7 et 8, dans lequel un ou plusieurs organes d'étanchéité (540) sont disposés entre les modules de batterie (100, 200) de la première unité et entre les modules de batterie (300, 400) de la deuxième unité pour rendre étanche le premier passage d'écoulement de fluide de refroidissement (P1) par rapport au second passage d'écoulement de fluide de refroidissement (P2) ; et entre les modules de batterie (500, 600) de la troisième unité pour rendre étanche le premier passage d'écoulement de fluide de refroidissement par rapport à un extérieur des modules de batterie (500, 600) de la troisième unité.

10. Module de batterie selon l'une des revendications 7 à 9, dans lequel au moins l'un des passages convergents d'écoulement de fluide de refroidissement (P3) comprend une partie en gradin (560) entre les unités adjacentes de modules de batterie, de telle sorte qu'une distance entre les plaques d'extrémité (100) des modules de batterie de l'unité positionnée en aval du passage convergent d'écoulement de fluide de refroidissement respectif (P3) et la surface intérieure du boîtier (700) est inférieure à une distance entre des plaques d'extrémité (100) des modules de batterie de l'unité positionnée en amont du passage convergent d'écoulement de fluide de refroidissement respectif (P3) et la surface intérieure du boîtier (700).

11. Module de batterie selon la revendication 10, dans lequel la partie en gradin (560) guide le passage convergent d'écoulement de fluide de refroidissement respectif (P3) pour qu'il relie le second passage d'écoulement de fluide de refroidissement (P2) avec le premier passage d'écoulement de fluide de refroidissement (P1).

12. Module de batterie selon l'une des revendications 7 à 11, dans lequel au moins l'un des passages convergents d'écoulement de fluide de refroidissement (P3) comprend en outre un ou plusieurs organes de guidage (530b) entre un module de batterie (500, 600) d'une unité positionnée en aval de la première unité et la surface intérieure du boîtier (700) pour guider le passage convergent d'écoulement de fluide de refroidissement respectif (P3b) pour qu'il relie le second passage d'écoulement de fluide de refroidissement (P2) avec le premier passage d'écoulement de fluide de refroidissement (P1).

13. Module de batterie selon l'une des revendications 9 à 12, dans lequel le premier passage convergent d'écoulement de fluide de refroidissement (P3a) comprend en outre :
un ou plusieurs premiers organes de guidage (530a) qui confinent partiellement le second passage d'écoulement de fluide de refroidissement entre les plaques d'extrémité (100) de modules de batterie de la deuxième unité (300), (400) et la surface intérieure du boîtier (700) pour guider le premier passage convergent d'écoulement de fluide de refroidissement (P3a) pour qu'il relie le second passage d'écoulement de fluide de refroidissement (P2) avec le premier passage d'écoulement de fluide de refroidissement (P1), et/ou
un ou plusieurs seconds organes de guidage (530b) entre des modules de batterie (500, 600) de la troisième unité positionnée en amont dans la direction de la première unité et la surface intérieure du boîtier (700) pour guider le second passage convergent d'écoulement de fluide de refroidissement (P3b) pour qu'il relie le second passage d'écoulement de fluide de refroidissement (P2) avec le premier passage d'écoulement de fluide de refroidissement (P1).
